# EUROPÄISCHE PATENTSCHRIFT

(11) **EP 2 543 613 B1**
(45) Veröffentlichungstag und Bekanntmachung des Hinweises auf die Patenterteilung: **27.05.2015**
(21) Anmeldenummer: 12171424.0
(22) Anmeldetag: 11.06.2012
(51) Int. Cl.: B65G 47/88, B65G 1/08

(54) **Durchlaufregal mit mechanisch lose gekoppelter Separiervorrichtung**
Live storage rack with mechanically loose coupled separating device
Étagère traversante dotée d'un dispositif de séparation mécanique lâche

(30) Priorität: 04.07.2011 DE 102011078598
(43) Veröffentlichungstag der Anmeldung: 09.01.2013
(73) Patentinhaber: BITO-Lagertechnik Bittmann GmbH, 55590 Meisenheim (DE)
(72) Erfinder: Gassner, Okten, 55571 Odernheim (DE)
(74) Vertreter: Richardt Patentanwälte PartG mbB

(56) Entgegenhaltungen:
- AU-B2- 470 762
- DE-A1- 4 413 475
- DE-A1- 19 636 842
- ES-A1- 2 323 105
- US-A- 5 213 189

## Beschreibung

Die Erfindung betrifft ein Durchlaufregal mit Separiervorrichtung zur Separierung von einer Aufgabeseite zu einer Entnahmeseite hinbeförderten Ladungsträgern.

Bei mit Schwerkraft betriebenen Durchlaufregalen für Ladungsträger, wie z. B. Paletten oder Behälter, steht an dem ersten Ladungsträger, der sich auf der Entnahmeseite befindet, der größte Druck an. Je länger die Durchlaufbahn des Durchlaufregals ist, desto höher ist dieser Druck. Aufgrund dieses hohen Staudrucks lässt sich der vorderste Ladungsträger an der Entnahmeseite nicht ohne Probleme entnehmen. Es kommt oft zu Beschädigungen an dem Ladungsträger und/oder Lagergut.

Um eine solche Beschädigung zu vermeiden, ist aus der EP 0 842 874 A2 eine Separiervorrichtung bekannt, die eine erste vorderste Palette von einer nachfolgenden zweiten Palette separiert. Wenn sich die erste Palette in Förderrichtung zur Entnahmeseite des Durchlaufregals bewegt, verschwenkt sie eine angrenzend an die Entnahmeseite vorgesehene Steuerfahne aus einer ersten Stellung, in der sie sich über die Förderebene hinaus erstreckt, in eine zweite Stellung, in der sie in der Förderebene liegt. Die Steuerfahne ist über ein Betätigungsgestänge so mit einer in Förderrichtung stromaufwärts angeordneten Anschlageinrichtung verbunden, dass die Anschlageinrichtung bei der genannten Bewegung aus einer Freigabestellung, in der sie sich unterhalb der Förderebene befindet, in eine Anschlagstellung bewegt wird, in der sie sich über die Förderebene hinaus erstreckt. An dieser Anschlageinrichtung schlägt die nachfolgende zweite Palette an. Sobald die erste Palette von dem Durchlaufregal entnommen wird, wird die Steuerfahneneinrichtung durch eine Vorspanneinrichtung wieder in die erste Stellung bewegt. Gleichzeitig wird die Anschlageinrichtung über das Betätigungsgestänge aus der Anschlagstellung in die Freigabestellung bewegt, so dass sich die zweite Palette zur Entnahmeseite hin bewegen kann. Diese Bewegung der Paletten ermöglicht es, dass die erste Palette ohne Staudruck von dem Durchlaufregal entnommen werden kann.

Aus der DE 44 13 475 A1 ist weiter eine Vorrichtung zum Trennen von auf Rollenbahnen beförderten Paletten bekannt, mit einem drehbar gelagerten Verriegelungshebel und einem drehbar gelagerten Betätigungshebel. Diese erstrecken sich in einer ersten Position teilweise über die Rollenbahnebene hinaus und können durch eine nachfolgende zweite Palette in eine zweite Position unter die Rollenbahnebene vollständig abgesenkt werden. Der Verriegelungshebel und der Betätigungshebel werden jeweils mechanisch in ihrer ersten Position gehalten bzw. in diese zurückgeführt, wenn sie nicht mehr von Paletten in der zweiten Position gehalten werden. Die Drehachsen des Betätigungshebels und des Verriegelungshebels sind in einem Abstand zueinander längs der Rollenbahn angeordnet, der klein gegenüber der Länge der zu befördernden Paletten ist. Ein Sperrmechanismus hält den Verriegelungshebel in seiner Verriegelungsstellung, solange der Betätigungshebel nach unten gedrückt wird und hält so nachfolgende Paletten an.

Aus der DE 196 36 842 A1 ist eine Vorrichtung zum Trennen der vordersten von den andern Paletten auf der Entnahmeseite eines Fließlagers bekannt, die eine Schaltfahne, Schaltgestänge, Stoppkralle und gegebenenfalls ein Kniegelenk enthält. Ferner weist die Vorrichtung eine mit dem Schaltgestänge und der Stoppkralle resp. Kniehebel verbundene Kurvenscheibe auf, die einen gekrümmten Schlitz aufweist. Dieser steuert den Bewegungsablauf der Stoppkralle resp. des mit der Stoppkralle verbundenen Kniehebels und ermöglicht es, die Länge des Schaltgestänges in sperrendem und nicht-sperrendem Zustand konstant zu belassen.

Weitere Durchlaufregale mit Separiervorrichtung sind aus der DE 203 131 94 U1, DE 196 368 42 A1, DE 324 30 86 C1, DE 103 03 508 B4, DE 43 09 222 A1, EP 0 968 938 B1, DE102006041826 A1 bekannt. Aus der EP 1 897 823 A2 ist ein Durchlaufregal mit einer Separiervorrichtung bekannt, bei dem eine Steuerfahne über eine Betätigungsstange mit einer Vereinzelungsanschlageinrichtung in Verbindung steht.

In der EP 2 354 046 A1 ist eine Weiterbildung eines solchen Durchlaufregals mit Separiervorrichtung offenbart.

Der Erfindung liegt demgegenüber die Aufgabe zugrunde, ein verbessertes Durchlaufregal mit Separiervorrichtung sowie ein Verfahren zur Separierung von Ladungsträgern zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen der Erfindung sind besonders vorteilhaft, da die sonst übliche direkte mechanische Kopplung der Vereinzelungsanschlageinrichtung und der Steuerfahne durch eine Bestätigungsstange vermieden werden kann. Eine solche direkte mechanische Kopplung hat nämlich den Nachteil, dass hierdurch nicht nur ein Kraftpfad zur Übertragung einer Betätigungskraft von der Steuerfahne auf die Vereinzelungsanschlageinrichtung ausgeübt wird, um den verriegelten Anschlagzustand bzw. den Freigabezustand festzulegen, sondern dass auch bei einem unsachgemäßen Betrieb des Durchlaufregals ein Kraftpfad dann gebildet wird, wenn beispielsweise das Anschlagelement in seinem Freigabezustand durch einen passierenden Ladungsträger weggeschwenkt wird und gleichzeitig eine Kraft auf die Steuerfahne ausgeübt wird, um den verriegelten Anschlagzustand einzustellen. Bei einem solchen unsachgemäßen Betrieb kann es zu einer schwerwiegenden Beschädigung der Separiervorrichtung kommen.

Hier wird erfindungsgemäß Abhilfe geschaffen, indem prinzipbedingt ein Kraftpfad von der Steuerfahne nur zu dem Arretierungselement der Vereinzelungsanschlageinrichtung durch eine lose mechanische Kopplung gebildet werden kann, um dieses in seiner Position zu steuern, nicht aber ein direkter Kraftpfad zwischen dem Anschlagelement der Vereinzelungsanschlageinrichtung und der Steuerfahne. Durch diese lose mechanische Kopplung zwischen der Steuerfahne und dem Arretierungselement werden Beschädigungen der Separiervorrichtung bei einem unsachgemäßen Betrieb des Durchlaufregals vermieden.

Unter einer "losen mechanischen Kopplung" wird hier jede Art der mechanischen Kopplungsmittel zwischen der Steuerfahne und der Vereinzelungsanschlageinrichtung, beispielsweise dem Arretierungselement, verstanden, über die im Normalbetrieb der verriegelten Anschlagzustand bzw. der Freigabezustand einstellbar ist, und welche in einem Betriebszustand der Separiervorrichtung, in dem beispielsweise durch entsprechende Bewegung der Steuerfahne der verriegelten Anschlagzustand eingestellt werden soll, während ein Ladungsträger gerade die Separiervorrichtung passiert, kein Kraftpfad von der Steuerfahne zu der Vereinzelungsanschlageinrichtung gebildet wird, so dass eine Beschädigung der Mechanik vermieden wird.

Unter einer "Vereinzelungsanschlageinrichtung" werden hier insbesondere Mittel verstanden, die dazu ausgebildet sind, einen Anschlag mit einem Ladungsträger zu bilden, um diesen zu stoppen, wenn sich die Vereinzelungsanschlageinrichtung in dem verriegelten Anschlagzustand befindet, und die dazu ausgebildet sind, einen Ladungsträger passieren zu lassen, wenn sich die Vereinzelungsanschlageinrichtung in dem Freigabezustand befindet. Die Vereinzelungsanschlageinrichtung kann also zumindest zwei Betriebszustände einnehmen, nämlich den verriegelten Anschlagzustand und den Freigabezustand, sowie - je nach Ausführungsform - einen transienten Zustand beim Übergang zwischen dem Freigabezustand und dem verriegelten Anschlagzustand.

Weiter bildet das Steuerelement eine formschlüssige Anschlagfläche für das Arretierungselement, insbesondere eine Falle, in die das Arretierungselement gefallen ist, wenn sich die Steuerfahne in ihrer zweiten Stellung befindet, um so den verriegelten Anschlagzustand einzustellen. Dies kann allein aufgrund der Schwerkraft, die auf das Arretierungselement wirkt, erfolgen und/oder durch eine Federkraft, die durch ein elastisches Rückstellelement auf das Arretierungselement ausgeübt wird, sobald dieses aus seiner Ruheposition ausgelenkt ist.

Ferner sind Ausführungsformen der Erfindung besonders vorteilhaft, da die lose mechanische Kopplung zwischen der Steuerfahne und der Vereinzelungsanschlageinrichtung, d.h. beispielsweise dem Anschlagelement, mit geringem konstruktivem Aufwand sowie nahezu verschleiß- und wartungsfrei realisierbar ist.

Nach Ausführungsformen der Erfindung ist das Arretierungselement relativ zu der Vereinzelungsanschlageinrichtung bewegbar, insbesondere translatorisch bewegbar. Hierzu kann die Vereinzelungsanschlageinrichtung ein Langloch aufweisen, in dem das Arretierungselement in einem translatorischen Freiheitsgrad frei beweglich ist. Ferner kann das Arretierungselement einen rotatorischen Freiheitsgrad innerhalb des Langlochs haben, um zum Beispiel ein Abwälzen des Arretierungselements auf einer Steuerkurve des Steuerelements zu ermöglichen.

Insbesondere kann das Arretierungselement eine Rolle aufweisen, deren Achse 38 durch das Langloch geführt ist.

Nach einer Ausführungsform der Erfindung hat das Steuerelement eine Steuerkurve zur Steuerung der Position des Arretierungselements relativ zu der Vereinzelungsanschlageinrichtung, um dadurch den verriegelten Anschlagzustand oder den Freigabezustand je nach Stellung der Steuerfahne einzustellen.

Nach einer Ausführungsform der Erfindung hat das Steuerelement eine Steuerungskulisse, in die eine Steuerstange eingreift, die mit der Schwenkachse der Steuerfahne fest verbunden ist. Auf diese Art und Weise wird die Position der Steuerungskulisse relativ zu der Vereinzelungsanschlageinrichtung durch die Stellung der Steuerfahne bestimmt.

Nach einer Ausführungsform der Erfindung ist das Steuerelement schwenkbar an einem Rahmen des Durchlaufregals befestigt und beispielsweise klinkenförmig ausgebildet. Die schwenkbare Lagerung des Steuerelements an dem Rahmen des Durchlaufregals kann an einem Ende des klinkenförmigen Steuerelements vorgesehen sein.

Ausführungsformen der Erfindung sind besonders vorteilhaft, da die Schwenkachse der Steuerfahne im Wesentlichen senkrecht zu der Förderebene verläuft, sodass die Steuerfahne in etwa parallel zu der Förderebene schwenkbar ist. Durch einen passierenden Ladungsträger wird also die Steuerfahne nicht nach unten gedrückt, wie sonst im Stand der Technik üblich, sondern seitlich weggeschwenkt. Dies hat den Vorteil, dass die Steuerfahne von dem passierenden Ladungsträger auch dann noch in der zweiten Stellung gehalten wird, wenn die vordere Begrenzung des Ladungsträgers das Anschlagelement schon längst passiert hat und die hintere Begrenzung des Ladungsträgers gerade noch im Bereich des äußersten Ende der Steuerfahne ist.

Wenn beispielsweise der betreffende Ladungsträger den Entnahmeanschlag des Durchlaufregals an der Entnahmeseite erreicht hat und von dort beispielsweise mit einem Gabelstapler entnommen werden soll, so hat dies verschiedene Vorteile:

Wenn der Ladungsträger durch den Gabelstapler zunächst leicht von der Förderebene abgehoben wird, so wird die Steuerfahne dennoch in ihrer zweiten Stellung gehalten, da sie oberhalb der Förderebene angeordnet ist. Die Vereinzelungsanschlageinrichtung verbleibt also in dem verriegelten Anschlagzustand, sodass der nachfolgende Ladungsträger noch an dem Anschlagelement der Vereinzelungsanschlageinrichtung verbleibt. Dies hat den Vorteil, dass der nachfolgende zweite Ladungsträger nicht auf den ersten Ladungsträger, der gerade entnommen werden soll, während des Entnahmevorgangs trifft. Ein weiterer wesentlichen Vorteil ergibt sich dann, wenn der Entnahmevorgang des ersten Ladungsträgers abgebrochen werden muss: Beispielsweise fährt der Gabelstapler ein Stück weit zurück, um den ersten Ladungsträger, nachdem er leicht von der Förderebene abgehoben wurde, rückwärts aus der Entnahmeseite zu entnehmen. Aufgrund der Überlappung der hinteren Begrenzung des ersten Ladungsträgers mit dem Ende der Steuerfahne verbleibt diese auch dann noch in ihrer zweiten Stellung, wenn der Gabelstapler bereits ein kleines Stück zurückgefahren ist. Wenn der Entnahmevorgang in diesem Status abgebrochen oder rückgängig gemacht werden soll, so ist dies ohne Weiteres möglich, da sich die Vereinzelungsanschlageinrichtung noch in dem verriegelten Anschlagzustand befindet. Der Gabelstapler kann also wieder ein Stück vorfahren, um beispielsweise einen hinterkreuzenden Gabelstapler passieren zu lassen, ohne dass es hierdurch zu Beschädigungen an den Ladungsträgern oder der Separiervorrichtung kommen kann.

Besonders bevorzugt ist hierbei, wenn sich die Steuerfahne über zumindest die halbe Breite des Durchlaufregals, besonders vorzugsweise über die gesamte Breite des Durchlaufregals, erstreckt, da auf diese Art und Weise der Überlappungsbereich zwischen dem hinteren Ende des Ladungsträgers und dem Ende der Steuerfahne während des Entnahmevorgangs maximiert wird.

Nach einer Ausführungsform der Erfindung hat die Steuerfahne eine Länge von zumindest einer halben Länge des Aufnahmebereichs zwischen dem Entnahmeanschlag und dem Anschlagelement. Insbesondere kann die Steuerfahne eine Länge von 50 % bis 75 % der Länge des Aufnahmebereichs aufweisen. Dies ist besonders vorteilhaft, um einen sogenannten Mischbetrieb von Ladungsträgern unterschiedlicher Längen zu ermöglichen. Wenn beispielsweise zwei verschiedene Typen von Ladungsträgern zum Einsatz kommen, nämlich ein kurzer Ladungsträger und ein langer Ladungsträger, der die doppelte Länge wie ein kurzer Ladungsträger hat, und der Aufnahmebereich eine Länge aufweist, die zur Aufnahme eines der langen Ladungsträger ausreichend ist, so ermöglicht dies einen optimalen Mischbetrieb mit langen und kurzen Ladungsträgern, insbesondere dann, wenn die Steuerfahne mindestens die Länge eines kurzen Ladungsträgers aufweist, so dass die Steuerfahne auch dann in der zweiten Stellung gehalten wird, wenn sich in dem Aufnahmebereich nur ein kurzer Ladungsträger befindet.

Beispielsweise können als Ladungsträger kurze Europaletten einer Länge von 600 mm und lange Europaletten einer Länge von 1200 mm für einen Mischbetrieb des Durchlaufregals zum Einsatz kommen. Solche "langen Europaletten" werden üblicherweise als "Europaletten" bezeichnet und "kurze Europaletten" als "Düsseldorfer-Paletten". In diesem Fall hat der Aufnahmebereich vorzugsweise eine Länge von mindestens 1200 mm und die Länge der Steuerfahne beträgt mehr als 600 mm, vorzugsweise 700 mm bis 750 mm, so dass der Überlappungsbereich zwischen der Steuerfahne und einer am Endanschlag befindlichen kurzen Europalette beispielsweise 100 mm bis 150 mm beträgt.

Nach einer Ausführungsform der Erfindung ist die Steuerfahne elastisch verformbar, insbesondere aus einem elastisch verformbaren Kunststoff oder aus Gummi. Dies hat den Vorteil, dass ein weiterer Schutz gegen eine Beschädigung der Separiervorrichtung gegeben ist, auch dann, wenn es im Einzelfall doch dazu kommt, dass die ersten und zweiten Ladungsträger auf der Entnahmeseite aufeinanderprallen.

Nach einer Ausführungsform der Erfindung hat die Steuerfahne ein Dämpfungselement, um das Zurückschwenken der Steuerfahne aus der zweiten Stellung in die erste Stellung zu verlangsamen. Hiermit wird erreicht, dass nach Freigabe der Steuerfahne in der zweiten Stellung durch vollständige Entnahme des ersten Ladungsträgers der Übergang von dem verriegelten Anschlagzustand in den Freigabezustand mit leichter Verzögerung erfolgt, um zusätzlich sicherzustellen, dass der nachfolgende zweite Ladungsträger nach dem Passieren des Anschlagelements nicht auf die hintere Begrenzung des ersten Ladungsträgers treffen kann.

Nach einer Ausführungsform der Erfindung ist der Abstand zwischen dem Anschlagelement und dem Entnahmeanschlag größer oder gleich der Länge des längsten der ersten und zweiten Ladungsträger.

Nach einer Ausführungsform der Erfindung ist der Abstand zwischen dem Entnahmeanschlag und dem Anschlagelement nicht größer ist als die Summe der Länge des kürzesten der ersten und zweiten Ladungsträger und der Länge der Steuerfahne, sodass die Steuerfahne durch jeden der ersten und zweiten Ladungsträger in der zweiten Stellung gehalten wird, wenn der betreffende Ladungsträger an dem Entnahmeanschlag anliegt.

Im Weiteren werden Ausführungsformen der Erfindung mit Bezugnahme auf die Zeichnungen näher erläutert. Es zeigen:
- Figur 1: eine perspektivische Ansicht einer Ausführungsform eines erfindungsgemäßen Durchlaufregals, wobei sich die Steuerfahne in einer ersten Stellung befindet,
- Figur 2: zeigt eine teilweise Draufsicht auf das Durchlaufregal, wobei sich die Steuerfahne in der zweiten Stellung befindet,
- Figur 3: zeigt eine seitliche Ansicht der Vereinzelungsanschlageinrichtung im Freigabezustand, in dem sich die Steuerfahne in der ersten Stellung befindet,
- Figur 4: zeigt die Vereinzelungsanschlageinrichtung, nachdem die Steuerfahne durch Ladungsträger, der gerade das Anschlagelement passiert hat, in die zweite Stellung verschwenkt worden ist,
- Figur 5: eine Seitenansicht der Vereinzelungsanschlageinrichtung in dem verriegelten Anschlagzustand,
- Figur 6: eine Teilansicht des Durchlaufregals in Förderrichtung,
- Figur 7: eine Seitenansicht einer Ausführungsform der Vereinzelungsanschlageinrichtung mit einer Detailansicht des Steuerelements,
- Figur 8: eine weitere Detailansicht einer Ausführungsform des Steuerelements,
- Figur 9: eine schematische Draufsicht auf eine Ausführungsform des Durchlaufregals mit einem Ladungsträger auf der Entnahmeseite,
- Figur 10: die Ausführungsform des Durchlaufregals der Figur 9 während der Entnahme des Ladungsträgers,
- Figur 11: eine schematische Draufsicht auf eine Ausführungsform des Durchlaufregals bei entnahmeseitig aufeinanderstoßenden Ladungsträgern.

Im Weiteren werden einander entsprechende Elemente der verschiedenen Ausführungsformen jeweils mit gleichen Bezugszeichen gekennzeichnet.

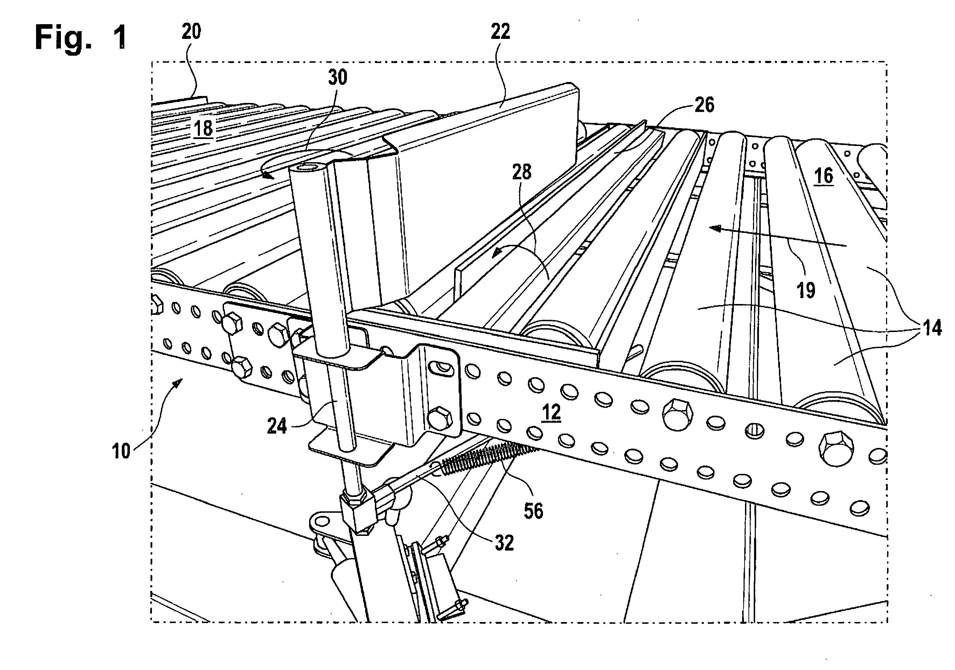

Die Figur 1 zeigt ein Durchlaufregal, welches hier aus einer Rollenbahn 10 besteht. Die Rollenbahn 10 wird durch einen Rahmen 12 gebildet, in dem mehrere Transportrollen 14 hintereinander angeordnet sind, um so eine Förderebene zu bilden, in der Ladungsträger 34 von einer Aufgabeseite 16 zu einer Entnahmeseite 18 in Förderrichtung 19 gefördert werden können, bis ein Ladungsträger 34 den Entnahmeanschlag 20 erreicht hat.

In der hier betrachteten Ausführungsform hat die Rollenbahn 10 ein leichtes Gefälle von der Aufgabeseite 16 zu der Entnahmeseite 18 hin, sodass die Ladungsträger 34 aufgrund der Schwerkraft in die Förderrichtung 19 befördert werden.

An der Rollenbahn 10 ist eine Steuerfahne 22 befestigt, die sich in der hier betrachteten Ausführungsform von dem in Förderrichtung 19 linken Rand der Rollenbahn 10 bis etwa zur Mitte der Rollenbahn 10 erstreckt. In anderen Ausführungsformen kann sich die Steuerfahne 22 darüber hinaus zum Beispiel bis zum rechten Rand der Rollenbahn 10 erstrecken.

Die Steuerfahne 22 ist um eine Schwenkachse 24 schwenkbar an dem Rahmen 12 gelagert, sodass die Steuerfahne 22 im Wesentlichen parallel zu der durch die Transportrollen 14 gebildeten Förderebene durch einen passierenden Ladungsträger 34 verschwenkbar ist. Die Figur 1 zeigt die Steuerfahne 22 in ihrer ersten Stellung, wenn sie nicht durch einen passierenden Ladungsträger 34 verschwenkt ist. Unmittelbar vor der in Figur 1 gezeigten ersten Stellung der Steuerfahne 22 ist in Förderrichtung 19 ein Anschlagelement 26 einer Vereinzelungsanschlageinrichtung 36 angeordnet, welches sich in einem verriegelten Anschlagzustand oder einem Freigabezustand befinden kann. In dem Freigabezustand wird das Anschlagelement 26 durch die Vorderkante eines das Anschlagelement 26 passierenden Ladungsträgers (vgl. beispielsweise Ladungsträger 34 und 60, wie in einigen der nachfolgenden Figuren gezeigt) nach vorne in Pfeilrichtung 28 weggeschwenkt, sodass der Ladungsträger 34 oder 60 auf die Steuerfahne 22 trifft und diese seitlich in Pfeilrichtung 30 wegschwenkt, wie in der Figur 1 gezeigt.

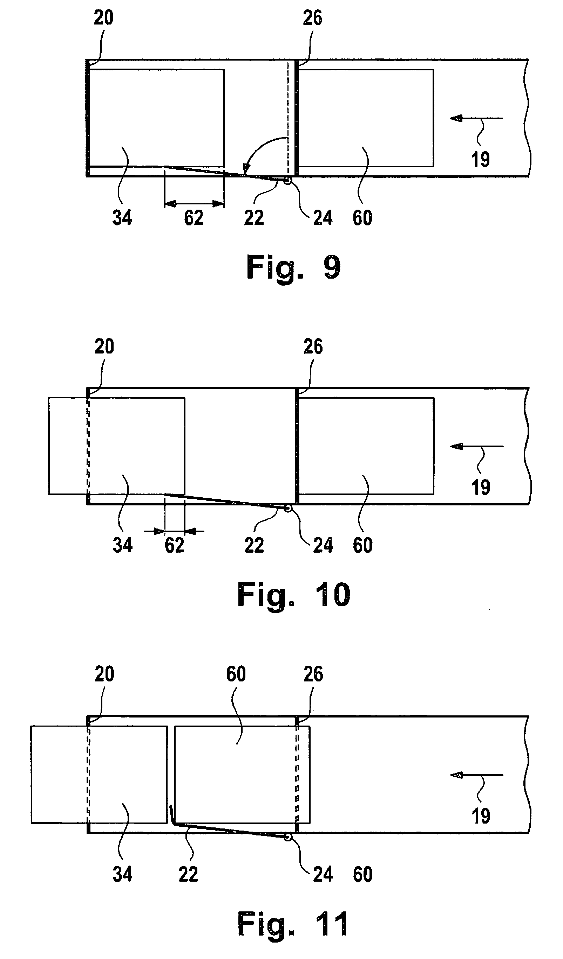

Befindet sich das Anschlagelement 26 dagegen in seinem verriegelten Anschlagzustand, so ist die Schwenkbewegung in Pfeilrichtung 28 blockiert, sodass ein mit seiner Vorderkante auf das Anschlagelement 26 auftreffender Ladungsträger 60 durch das Anschlagelement 26 gestoppt wird, wie dies beispielsweise für den Ladungsträger 60 in Fig. 9 der Fall ist.

Zur Einstellung des verriegelten Anschlagzustands bzw. des Freigabezustands ist die Steuerfahne 22 mit dem Anschlagelement 26 der Vereinzelungsanschlageinrichtung 36 mechanisch lose gekoppelt, wie es im Weiteren näher erläutert wird, und zwar insbesondere über die Steuerstange 32, die mit der Schwenkachse 24 fest verbunden ist, und sich mit dieser mitdreht.

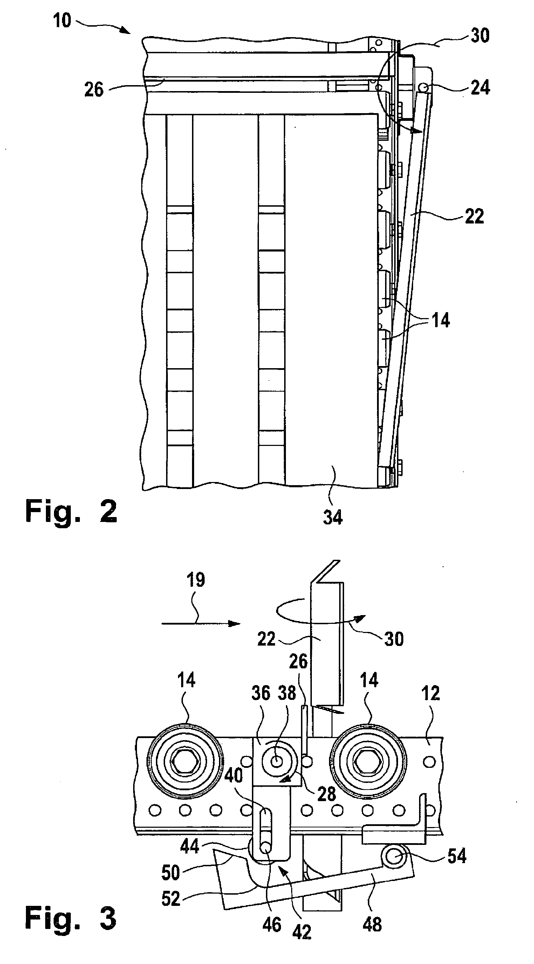

Die Figur 2 zeigt die Rollenbahn 10, nachdem ein Ladungsträger 34, wie zum Beispiel eine Euro-Palette, das Anschlagelement 26 passiert und die Steuerfahne 22 in ihre zweite Stellung verschwenkt hat. Von besonderem Vorteil ist dabei, dass die Steuerfahne 22 unabhängig davon, ob die Euro-Palette in Quer- oder in Längsrichtung auf der Rollenbahn 10 befördert wird, weggeschwenkt wird. Die Kufen des Ladungsträgers 34, d.h. der Euro-Palette, können also entweder senkrecht oder parallel zu der Förderrichtung 19 ausgerichtet sein.

Die Figur 3 zeigt im Detail die Vereinzelungsanschlageinrichtung 36 mit dem Anschlagelement 26. Die Vereinzelungsanschlageinrichtung 36 ist um ihre zu den Transportrollen 14 parallele Achse 38 in Pfeilrichtung 28 schwenkbar an dem Rahmen 12 gelagert.

Die Vereinzelungsanschlageinrichtung 36 hat ein Langloch 40 zur beweglichen Aufnahme eines Arretierungselements 42. Das Arretierungselement 42 besteht hier aus einer Rolle 44, deren Drehachse 46 durch das Langloch 40 verläuft, sodass das Arretierungselement 42 in dem Langloch 40 lose gehalten wird. Die Figur 3 zeigt die Vereinzelungsanschlageinrichtung 36 in ihrem Freigabezustand. In diesem Freigabezustand verläuft das Langloch 40 näherungsweise in vertikaler Richtung, sodass sich das Arretierungselement 42 aufgrund der Schwerkraft am unteren Ende des Langlochs 40 in seiner Ruheposition befindet.

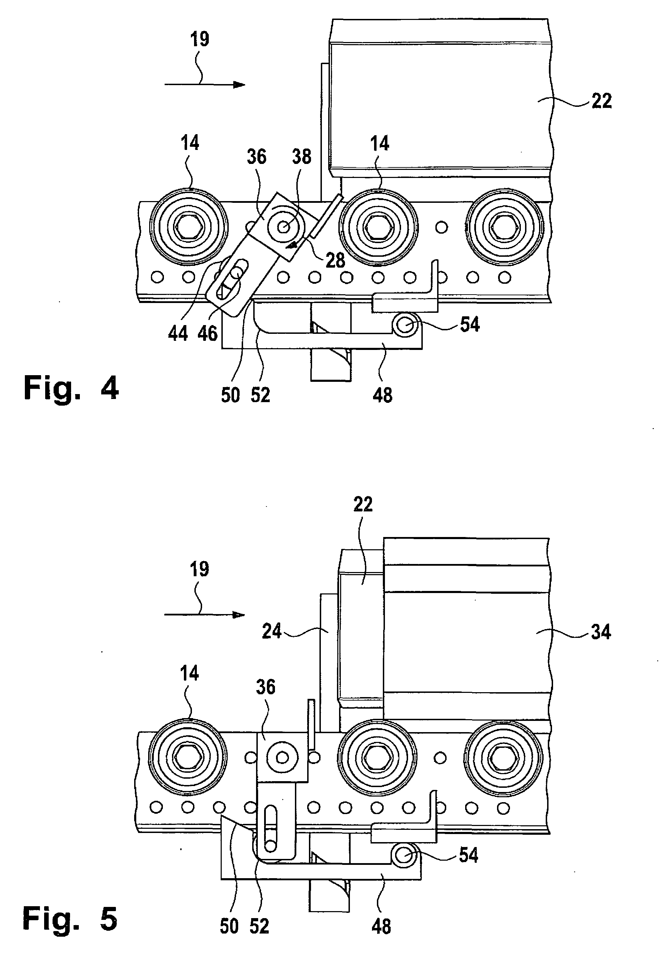

Die Separiervorrichtung hat ferner ein Steuerelement 48, welches bei der hier betrachteten Ausführungsform klinkenförmig ausgebildet ist. Das Steuerelement 48 hat an seinem einem Ende eine Steuerkurve 50, die hier als Schräge ausgebildet ist, sowie einen Anschlagbereich 52 zur Bildung eines Formschluss mit der Rolle 44 des Arretierungselements 42. Alternativ kann die Steuerkurve 50 so ausgebildet sein, dass diese gleichzeitig auch den Anschlagbereich 52 ausbildet, was eine noch kompaktere Bauform des Steuerelements 48 ermöglicht. Der Anschlagbereich 52 des Steuerelements 48 hat hier einen Radius, der dem Radius der Rolle 44 gleicht, sodass die Rolle 44 in dem Anschlagbereich 52 an dem Steuerelement 48 in dem verriegelten Anschlagzustand (Fig. 5) anliegen kann.

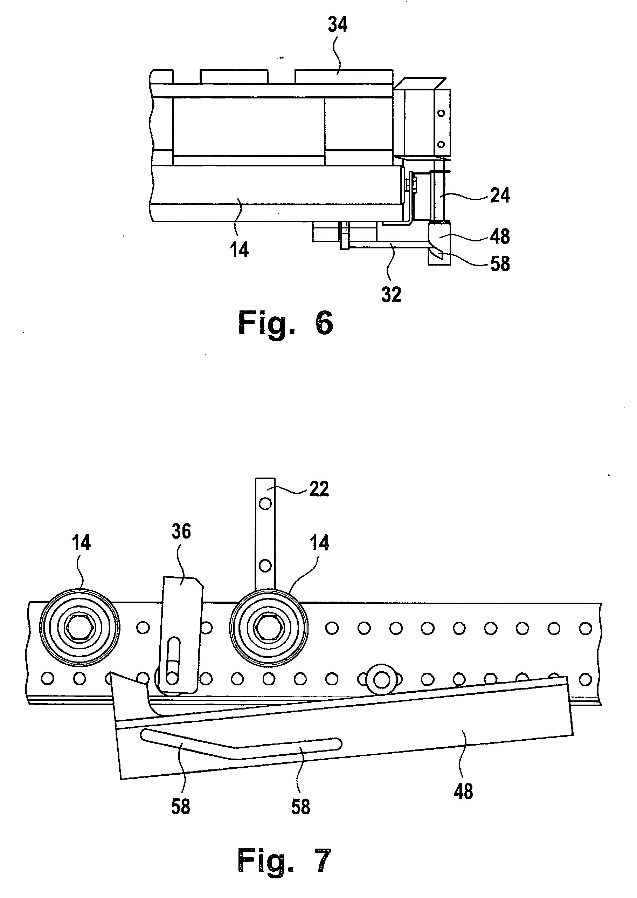

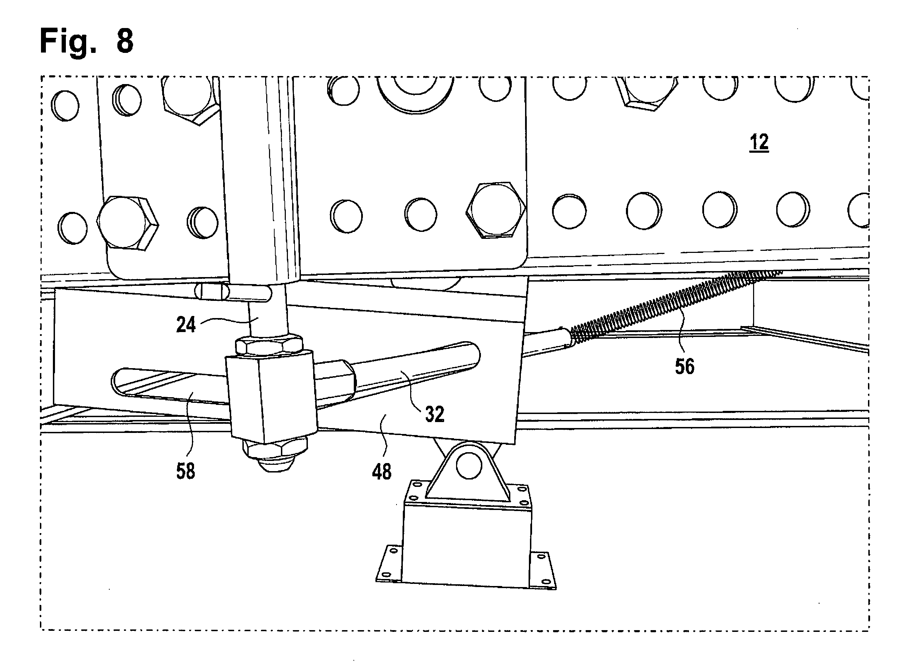

An seinem anderen Ende ist das Steuerelement 48 um seine Achse 54 an dem Rahmen 12 schwenkbar gelagert. Die Schwenkposition des Steuerelements 48 um seine Achse 54 wird durch die Stellung der Steuerfahne 22 bestimmt, welche über die Steuerstange 32 mit dem Steuerelement 48 mechanisch gekoppelt ist, wie es insbesondere in den Figuren 7 und 8 im Detail gezeigt ist.

Die Figur 4 zeigt den Übergang von dem Freigabezustand der Figur 3 in den verriegelten Anschlagzustand der Figur 5. Dieser Übergang erfolgt, wenn zum Beispiel der Ladungsträger 34 das Anschlagelement 26 erreicht, wenn sich dieses in dem Freigabezustand der Figur 3 befindet, sodass dieses dann in Pfeilrichtung 28 weggeschwenkt wird. Der Ladungsträger 34 trifft dann auf die Steuerfahne 22 und schwenkt diese in Pfeilrichtung 30 weg, sodass die Steuerfahne 22 in ihre zweite Stellung gemäß Figur 4 übergeht. Aufgrund dieser Schwenkbewegung der Steuerfahne 22, wird das Steuerelement 48 um die Achse 54 nach oben geschwenkt, sodass die Rolle 44 auf der Steuerkurve 50 aufsetzt und dann entlang dieser Steuerkurve 50 durch die Schwenkbewegung des Steuerelements 48 verfahren wird. Hierbei bewegt sich das Arretierungselement 42 entlang des Langlochs 40 relativ zu der Vereinzelungsanschlageinrichtung 36, indem es angehoben wird, wie in der Figur 4 dargestellt.

Nachdem der Ladungsträger 34 das Anschlagelement 26 vollständig passiert hat, schwenkt dieses entgegen der Pfeilrichtung 28 aufgrund der Schwerkraft zurück, wobei die Rolle 44 über die Steuerkurve 50 nach unten läuft und an dem Ende der Steuerkurve 50 dann in den Anschlagbereich 52 fällt. Das Steuerelement 48 wird in seiner verschwenkten Position gehalten, solange der Ladungsträger 34 sich noch im Eingriffsbereich der Steuerfahne 22 befindet, und diese in ihrer zweiten Stellung hält. Hierdurch wird der in Figur 5 gezeigte verriegelte Anschlagzustand erreicht. Nach Entnahme des Ladungsträgers 34 schwenkt die Steuerfahne 22 aus ihrer zweiten Stellung gemäß Figur 5 wieder in ihre erste Stellung gemäß Figur 3 zurück, sodass dann wieder der Freigabezustand hergestellt ist. Zum Zurückschwenken der Steuerfahne 22 wirkt eine Rückstellkraft auf die Steuerfahne 22, die beispielsweise durch ein elastisches Element ausgeübt wird, welches bei der Schwenkbewegung aus der ersten in die zweite Stellung der Steuerfahne 22 deformiert worden ist. Beispielsweise kann hierzu eine Schraubenfeder 56 exzentrisch an der Steuerstange 32 und an dem Rahmen 12 befestigt sein, wie in der Figur 1 und 8 gezeigt, sodass die Schraubenfeder 56 beim Schwenken der Steuerfahne 22 von der ersten in die zweite Stellung gespannt wird und hierdurch eine Rückstellkraft ausübt. Für eine zeitliche Verzögerung des Rückschwenkens der Steuerfahne 22 von der zweiten in die erste Stellung kann ein Dämpfungselement vorgesehen sein, welches beispielsweise ebenfalls an der Steuerstange 32 angreifen kann, um das Rückschwingen der Steuerfahne 22 zu dämpfen.

Die Figur 7 zeigt eine Ausführungsform des Steuerelements 48 mit einer Steuerungskulisse 58, in die die Steuerstange 32 eingreift, um die Schwenkposition des Steuerelements 48 in Abhängigkeit von der Schwenkposition der Steuerfahne 22 einzustellen. Der Eingriff der Steuerstange 32 in die Steuerungskulisse 58 ist auch in den Ausführungsformen der Figuren 6 und 8 dargestellt.

Die Figur 9 zeigt in schematischer Draufsicht eine Ausführungsform des erfindungsgemäßen Durchlaufregals im Betrieb. In dem gezeigten Zustand hat ein erster Ladungsträger 34 die Steuerfahne 22, die hier die gesamte Breite der Rollenbahn 10 überspannt, aus der ersten Stellung in die zweite Stellung verschwenkt und den Entnahmeanschlag 20 erreicht. In dieser Position hält der Ladungsträger 34 die Steuerfahne 22 also durch den Überlappungsbereich 62 in ihrer zweiten Position, sodass der verriegelte Anschlagzustand, wie in der Figur 5 dargestellt, eingestellt ist. Ein nachfolgender Ladungsträger 60 wird daher durch das Anschlagelement 26 gestoppt.

Der Ladungsträger 34 wird dann zum Beispiel durch einen Gabelstapler oder robotisch von der Förderebene abgehoben und dann über den Entnahmeanschlag 20 von dem Durchlaufregal entnommen, wie in der Figur 10 dargestellt. Dabei gibt der Ladungsträger 34 aufgrund seiner Längenerstreckung nicht sofort die Steuerfahne 22 frei; es verkürzt sich dabei zunächst nur der Überlappungsbereich 62 zwischen dem hinteren Ende der Ladungsträgers 34 und dem äußeren Ende der Steuerfahne 22 , die zweite Stellung der Steuerfahne 22 wird aber beibehalten. Dies hat den Vorteil, dass in der in der Figur 10 gezeigten Entnahmeposition des Ladungsträgers 34 dieser wieder entgegen der Förderrichtung 19 in die Entnahmeseite 18 zurückverfahren werden kann, beispielsweise um einen anderen Gabelstapler passieren zu lassen. Bei einem solchen Abbruch des Entnahmevorgangs in der in Figur 10 gezeigten Position ist ferner vorteilhaft, dass der Ladungsträger 60 zunächst an dem Anschlagelement 26 verbleibt, sodass er nicht auf den vorderen Ladungsträger 34 auftreffen kann.

Die Figur 11 zeigt eine weitere Ausführungsform des Durchlaufregals mit einer elastischen Steuerfahne 22. In dem in der Figur 11 gezeigten Betriebszustand wurde der Ladungsträger 34 bereits teilweise aus der Entnahmeseite 18 entnommen, und zwar so weit, dass die Steuerfahne 22 bereits freigegeben worden ist und ein Stück weit in Richtung auf ihre erste Stellung zurückgeschwenkt ist. Dadurch wurde der Freigabezustand eingestellt, sodass der Ladungsträger 60 das Anschlagelement 26 passiert hat und dann in Richtung auf die Entnahmeseite 18 in Förderrichtung 19 bewegt worden ist. Da aber der Entnahmevorgang für den Ladungsträger 34 unterbrochen worden ist, trifft der Ladungsträger 60 nicht auf den Entnahmeanschlag 20, sondern auf die hintere Begrenzung des Ladungsträgers 34, wobei das äußere Ende der Steuerfahne 22 zwischen der hinteren Begrenzung des Ladungsträgers 34 und der vorderen Begrenzung des Ladungsträgers 60 eingeklemmt und elastisch deformiert wird.

Wenn anschließenden der Entnahmevorgang für den Ladungsträger 34 wieder aufgenommen wird und dieser vollständig aus der Entnahmeseite 18 entnommen worden ist, so bewegt sich der Ladungsträger 60 bis zu dem Entnahmeanschlag 20 und die Steuerfahne 22 geht in ihren unverformten Zustand über, ohne dass es zu einer Beschädigung der Separiervorrichtung oder einer Betriebsstörung gekommen ist.

Ein weiterer Vorteil ergibt sich in einer Situation, wo zum Beispiel der Ladungsträger 34 bereits so weit aus der Entnahmeseite 18 entnommen worden ist, dass die Steuerfahne 22 beginnt zurückzuschwenken. Wenn dann der Gabelstapler entgegen der Förderrichtung 19 den Ladungsträger 34 wieder zurückfährt, wird hierdurch eine Kraft auf die Rückseite der Steuerfahne 22 ausgeübt, die aber aufgrund der losen mechanischen Kopplung über das Arretierungselement 42 zwischen der Vereinzelungsanschlageinrichtung 36 und dem Steuerelement 48 nicht zu einer Beschädigung der Separiervorrichtung führen kann, da es keinen entsprechenden Kraftpfad hierfür gibt.

Das Durchlaufregal kann für einen Mischbetrieb mit kurzen und langen Ladungsträgern 34 oder 60 ausgebildet sein. Beispielsweise kann es sich bei dem Ladungsträger 34 um eine kurze Europalette mit einer Länge von 600 mm und bei dem Ladungsträger 60 um eine lange Europalette der doppelten Länge, das heißt, eine Länge von 1200 mm handeln. Der Aufnahmebereich der Separiervorrichtung, das heißt, der Abstand zwischen dem Entnahmeanschlag 20 und dem Anschlagelement 26, hat dann mindestens die Länge des langen Ladungsträgers 60, so dass dieser nach dem Passieren des Anschlagelements 26 dort aufgenommen werden kann. Vorzugsweise hat die Steuerfahne 22 eine Länge, die etwas größer ist als die Länge eines kurzen Ladungsträgers 34, beispielsweise eine Länge von 700 mm bis 750 mm, was einen Überlappungsbereich 62 (vergleiche Figuren 9 und 10) von 100 mm bis 150 mm ergibt. Unabhängig davon, ob sich ein kurzer Ladungsträger 34 oder ein langer Ladungsträger 60 in dem Aufnahmebereich befindet, wird also die Steuerfahne 22 in ihrer zweiten Stellung gehalten, was den Mischbetrieb ermöglicht.

### Bezugszeichenliste

- 10: Rollenbahn
- 12: Rahmen
- 14: Transportrollen
- 16: Aufgabeseite
- 18: Entnahmeseite
- 19: Förderrichtung
- 20: Entnahmeanschlag
- 22: Steuerfahne
- 24: Schwenkachse
- 26: Anschlagelement
- 28: Pfeilrichtung
- 30: Pfeilrichtung
- 32: Steuerstange
- 34: Ladungsträger
- 36: Vereinzelungsanschlageinrichtung
- 38: Achse
- 40: Langloch
- 42: Arretierungselement
- 44: Rolle
- 46: Drehachse
- 48: Steuerelement
- 50: Steuerkurve
- 52: Anschlagbereich
- 54: Achse
- 56: Schraubenfeder
- 58: Steuerungskulisse
- 60: Ladungsträger
- 62: Überlappungsbereich

## Patentansprüche

1. Durchlaufregal mit Separiervorrichtung zur Separierung von einer Aufgabeseite (16) zu einer Entnahmeseite (18) hin beförderten Ladungsträgern (34, 60) mit
- einer Steuerfahne (22), die durch einen sich in Förderrichtung (19) bewegenden Ladungsträger (34,60) aus einer ersten Stellung in eine zweite Stellung verschwenkbar ist,
- einer in der Förderrichtung (19) stromaufwärts vor der Steuerfahne (22) angeordneten Vereinzelungsanschlageinrichtung (36) mit einem Anschlagelement (26), wobei die Vereinzelungsanschlageinrichtung (36) mit der Steuerfahne (22) über ein Arretierungselement (42) der Vereinzelungsanschlageinrichtung (36) mechanisch so gekoppelt ist, dass sich das Anschlagelement (26) in einem verriegelten Anschlagzustand befindet, indem es sich über die Förderebene hinaus erstreckt, wenn sich die Steuerfahne (22) in der zweiten Stellung befindet, nachdem ein erster der Ladungsträger (34) die Vereinzelungsanschlageinrichtung (36) passiert hat und die Steuerfahne (22) in der zweiten Stellung hält, und in einem Freigabezustand befindet, indem es sich unter die Förderebene bewegen kann, wenn sich die Steuerfahne (22) in der ersten Stellung befindet, wobei das Arretierungselement (42) relativ zu der Vereinzelungsanschlageinrichtung (36) beweglich ist, sodass ein Formschluss (52) mit einem Steuerelement (48) gebildet wird, durch welchen eine Anschlagkraft, die ein nachfolgender zweiter Ladungsträger (60) auf das Anschlagelement (26) ausübt, aufnehmbar ist, wobei die Position des Steuerelements (48) durch die Stellung der Steuerfahne (22) festgelegt ist, wobei durch das Steuerelement (48) eine Falle (52) für das Arretierungselement (42) gebildet wird, wenn sich die Steuerfahne (22) in der zweiten Stellung befindet, wobei das Arretierungselement (42) so relativ zu der Vereinzelungsanschlageinrichtung (36) beweglich ist, dass es nach dem Passieren des ersten Ladungsträgers (34,60) in die Falle fällt, wenn sich die Steuerfahne (22) in der zweiten Stellung befindet.

2. Durchlaufregal nach Anspruch 1, wobei die Vereinzelungsanschlageinrichtung (36) ein Langloch (40) aufweist, in dem das Arretierungselement (42) translatorisch bewegbar ist.

3. Durchlaufregal nach Anspruch 1 oder 2, wobei das Steuerelement (48) eine Steuerkurve (50) aufweist, welche zur Steuerung der Position des Arretierungselements (42) relativ zu der Vereinzelungsanschlageinrichtung (36) ausgebildet ist.

4. Durchlaufregal nach Anspruch 3, wobei das Steuerelement (48) eine Steuerkurve (50) hat, über welche sich das Arretierungselement (42) abwälzt, wenn die Steuerfahne (22) aus der ersten Stellung in die zweiten Stellung schwenkt und wenn nach dem Passieren des ersten Ladungsträgers (34,60) die Steuerfahne (22) in der zweiten Stellung gehalten wird.

5. Durchlaufregal nach einem der vorhergehenden Ansprüche, mit einem elastischen Rückstellelement für das Arretierungselement (42), wobei durch das Rückstellelement eine Rückstellkraft auf das Arretierungselement (42) ausgeübt wird, sobald das Arretierungselement (42) durch das Steuerelement (48) aus seiner Ruheposition ausgelenkt ist.

6. Durchlaufregal nach einem der vorhergehenden Ansprüche, wobei das Steuerelement (48) eine Steuerungskulisse (58) aufweist, in welche eine Steuerstange (32) eingreift, die mit einer Schwenkachse (24) der Steuerfahne (22) verbunden ist, um eine Schwenkposition des Steuerelements (48) in Abhängigkeit von der Stellung der Steuerfahne (22) einzustellen.

7. Durchlaufregal nach einem der vorhergehenden Ansprüche, wobei das Steuerelement (48) klinkenförmig ausgebildet ist und an dem Durchlaufregal schwenkbar (54) befestigt ist.

8. Durchlaufregal nach einem der vorhergehenden Ansprüche, wobei die Schwenkachse (24) der Steuerfahne (22) senkrecht zu der Förderebene ist.

9. Durchlaufregal nach Anspruch 8, wobei sich die Steuerfahne (22) über zumindest die halbe Breite des Durchlaufregals erstreckt, wenn sich die Steuerfahne (22) in ihrer ersten Stellung befindet.

10. Durchlaufregal nach Anspruch 8, wobei sich die Steuerfahne (22) über die gesamte Breite des Durchlaufregals erstreckt, wenn sich die Steuerfahne (22) in ihrer ersten Stellung befindet.

11. Durchlaufregal nach Anspruch 8, 9 oder 10, wobei die Steuerfahne (22) elastisch verformbar ist.

12. Durchlaufregal nach Anspruch 11, wobei die Steuerfahne (22) aus einem elastisch verformbaren Kunststoff besteht.

13. Durchlaufregal nach einem der Ansprüche 8 bis 12, mit einem Dämpfungselement zur Dämpfung der Rückstellung der Steuerfahne (22) von der zweiten Stellung in die erste Stellung.

14. Durchlaufregal nach einem der vorhergehenden Ansprüche, mit einem Entnahmeanschlag (20) an der Entnahmeseite (18), und zumindest ersten und zweiten der Ladungsträgern (34, 60), wobei der Abstand zwischen dem Anschlagelement (26) und dem Entnahmeanschlag (20) größer oder gleich der Länge des längsten der ersten und zweiten Ladungsträger (34,60) ist.

15. Durchlaufregal nach Anspruch 14, wobei der Abstand zwischen dem Entnahmeanschlag (20) und dem Anschlagelement (26) nicht größer ist als die Summe der Länge des kürzesten der ersten und zweiten Ladungsträger (34,60) und der Länge der Steuerfahne (22) ist, sodass die Steuerfahne (22) durch jeden der ersten und zweiten Ladungsträger (34,60) in der zweiten Stellung gehalten wird, wenn der betreffende Ladungsträger (34,60) an dem Entnahmeanschlag (20) anliegt.

16. Durchlaufregal nach einem der vorhergehenden Ansprüche, wobei die Länge der Steuerfahne (22) mindestens die halbe Länge des Abstandes zwischen dem Anschlagelement (26) und dem Entnahmeanschlag (20) beträgt, mit einem Abstand zwischen 50 % bis 75 % zwischen dem Anschlagelement (26) und dem Entnahmeanschlag (20), insbesondere mindestens 600 mm.

17. Durchlaufregal nach Anspruch 16 mit einem Abstand von 700 mm bis 750 mm zwischen dem Anschlagelement (26) und dem Entnahmeanschlag (20).

18. Verfahren zur Separierung von ersten und zweiten Ladungsträgern (34, 60) in einem Durchlaufregal nach einem der vorhergehenden Patentansprüche, wobei das Anschlagelement (26) in dem Freigabezustand der Vereinzelungsanschlageinrichtung (36) beim Passieren des ersten Ladungsträgers (34) weggeschwenkt wird, sodass aufgrund der damit einhergehenden Schwenkbewegung der Steuerfahne (22) das Arretierungselement (42) durch das Steuerelement (48) aus seiner Ruheposition ausgelenkt wird, sodass nach dem Passieren des ersten Ladungsträgers (34) das Arretierungselement (42) in Richtung auf seine Ruheposition zurückgestellt wird, **dadurch gekennzeichnet, dass** es dort einen Formschluss mit dem Steuerelement (48) bildet, durch welchen der verriegelte Anschlagzustand der Vereinzelungsanschlageinrichtung (36) realisiert wird, sodass der nachfolgende zweite Ladungsträger (60) in dem verriegelten Anschlagzustand auf das Anschlagelement (26) trifft und hierdurch angehalten wird, sodass der zweite Ladungsträger (60) von dem ersten Ladungsträger (34) separiert wird.

19. Verfahren nach Anspruch 18, wobei die Rückstellung des Arretierungselements (42) in seine Ruhestellung allein aufgrund der Schwerkraft erfolgt.

20. Regalsystem mit einem Durchlaufregal nach einem der vorhergehenden Ansprüche 1 bis 17 und mit ersten und zweiten Ladungsträgern (34,60), wobei die zweiten Ladungsträger (34,60) in Förderrichtung (19) die doppelte Länge haben wie die ersten Ladungsträger (34,60), und wobei ein Aufnahmebereich des Durchlaufregals zwischen dem Anschlagelement (26) und dem Entnahmeanschlag (20) zur Aufnahme von zwei in Förderrichtung (19) hintereinander befindlichen der ersten Ladungsträger (34,60) oder eines der zweiten Ladungsträger (34,60) ausgebildet ist, und wobei die Steuerfahne (22) eine Länge von zumindest 50 % der Länge des Aufnahmebereichs zwischen dem Entnahmeanschlag (20) und dem Anschlagelement (26) aufweist.

21. Regalsystem mit einem Durchlaufregal nach Anspruch 20, wobei die Steuerfahne (22) zwischen 50% und 75% der Länge eines der zweiten Ladungsträger (34, 60) aufweist.

## Claims

1. A flow rack having a separating device for separating load carriers (34, 60) conveyed from a feed side (16) to a removal side (18), having
- a control vane (22), which can be pivoted by a load carrier (34, 60) moving in the transport direction (19) from a first position into a second position,
- a sorting stop arrangement (36) arranged upstream before the control vane (22) in the transport direction (19) and having a stop element (26), wherein the sorting stop arrangement (36) is mechanically coupled to the control vane (22) via a locking element (42) of the sorting stop arrangement (36) such that the stop element (26) is in a locked stop state, in which it extends beyond the transport plane, when the control vane (22) is in the second position, once a first of the load carriers (34) has passed the sorting stop arrangement (36) and the control vane (22) stops in the second position, and is in a release state, in which it can move under the transport plane, when the control vane (22) is located in the first position, wherein the locking element (42) is movable relative to the sorting stop arrangement (36), such that a form fit (52) with a control element (48) is formed, by means of which a stop force, which a subsequent second load carrier (60) exerts onto the stop element (26), can be taken up, wherein the position of the control element (48) is determined by the position of the control vane (22), wherein a latch (52) for the locking element (42) is formed by the control element (48) when the control vane (22) is in the second position, wherein the locking element (42) is movable relative to the sorting stop arrangement (36), such that it falls into the latch once the first load carrier (34, 60) has passed, when the control vane (22) is in the second position.

2. The flow rack according to Claim 1, wherein the sorting stop arrangement (36) has a slot (40), in which the locking element (42) can move in translation.

3. The flow rack according to Claim 1 or 2, wherein the control element (48) has a control cam (50), which is designed to control the position of the locking element (42) relative to the sorting stop arrangement (36).

4. The flow rack according to Claim 3, wherein the control element (48) has a control cam (50), over which the locking element (42) rolls when the control vane (22) pivots from the first position into the second position and when, once the first load carrier (34, 60) has passed, the control vane (22) is held in the second position.

5. The flow rack according to one of the preceding claims, comprising a resilient return element for the locking element (42), wherein, by means of the return element, a return force is exerted onto the locking element (42) as soon as the locking element (42) is deflected out from the rest position thereof by the control element (48).

6. The flow rack according to one of the preceding claims, wherein the control element (48) has a slotted control link (58), with which a control rod (32) engages, which is connected to a pivot axis (24) of the control vane (22) so as to adjust a pivot position of the control element (48) depending on the position of the control vane (22).

7. The flow rack according to one of the preceding claims, wherein the control element (48) is pawl-like and is fastened to the flow rack pivotably (54).

8. The flow rack according to one of the preceding claims, wherein the pivot axis (24) of the control vane (22) is perpendicular to the transport plane.

9. The flow rack according to Claim 8, wherein the control vane (22) extends over at least half the width of the flow rack when the control vane (22) is in the first position thereof.

10. The flow rack according to Claim 8, wherein the control vane (22) extends over the entire width of the flow rack when the control vane (22) is in the first position thereof.

11. The flow rack according to Claim 8, 9 or 10, wherein the control vane (22) is resiliently deformable.

12. The flow rack according to Claim 11, wherein the control vane (22) consists of a resiliently deformable plastic.

13. The flow rack according to one of Claims 8 to 12, having a damping element for damping the return of the control vane (22) from the second position into the first position.

14. The flow rack according to one of the preceding claims, having a removal stop (20) on the removal side (18) and at least first and second of the load carriers (34, 60), wherein the distance between the stop element (26) and the removal stop (20) is greater than or equal to the length of the longest of the first and second load carriers (34, 60).

15. The flow rack according to Claim 14, wherein the distance between the removal stop (20) and the stop element (26) is no greater than the sum of the length of the shortest of the first and second load carriers (34, 60) and the length of the control vane (22), such that the control vane (22) is held in the second position by each of the first and second load carriers (34, 60) when the load carrier (34, 60) in question bears against the removal stop (20).

16. The flow rack according to one of the preceding claims, wherein the length of the control vane (22) is at least half the length of the distance between the stop element (26) and the removal stop (20), with a distance between 50 % to 75 % between the stop element (26) and the removal stop (20), in particular at least 600 mm.

17. The flow rack according to Claim 16 with a distance from 700 mm to 750 mm between the stop element (26) and the removal stop (20).

18. A method for separating first and second load carriers (34, 60) in a flow rack according to one of the preceding patent claims, wherein the stop element (26) is pivoted away in the release state of the sorting stop arrangement (36) as the first load carrier (34) passes, such that, on account of the associated pivot motion of the control vane (22), the locking element (42) is deflected out from the rest position thereof by the control element (48), such that, once the first load carrier (34) has passed, the locking element (42) is pushed back in the direction of the rest position thereof, **characterised in that** it forms a form fit there with the control element (48), by means of which the locked stop state of the sorting stop arrangement (36) is produced, such that the subsequent second load carrier (60) in the locked stop state contacts the stop element (26) and is thus stopped, such that the second load carrier (60) is separated form the first load carrier (34).

19. The method according to Claim 18, wherein the locking element (42) is returned into the rest position thereof merely on the basis of the force of gravity.

20. A rack system having a flow rack according to one of preceding Claims 1 to 17 and having first and second load carriers (34, 60), wherein the second load carriers (34, 60) have twice the length in the transport direction (19) as the first load carriers (34, 60), and wherein a receiving region of the flow rack between the stop element (26) and the removal stop (20) is designed to receive two of the first load carriers (34, 60) arranged in succession in the transport direction (19) or one of the second load carriers (34, 60), and wherein the control vane (22) has a length of at least 50 % of the length of the receiving region between the removal stop (20) and the stop element (26).

21. The rack system having a flow rack according to Claim 20, wherein the control vane (22) has between 50 % and 75 % of the length of one of the second load carriers (34, 60).

## Revendications

1. Étagère traversante avec un dispositif de séparation pour séparer des supports de charge (34, 60) déplacés d'un côté dépôt (16) vers un côté retrait (18), avec
- un drapeau de commande (22) susceptible d'être pivoté d'une première position vers une deuxième position par un support de charge (34, 60) se déplaçant dans la direction de transport (19),
- un dispositif de butée d'individualisation (36) agencé en amont du drapeau de commande (22) dans la direction de transport (19), avec un élément de butée (26), le dispositif de butée d'individualisation (36) étant accouplé mécaniquement au drapeau de commande (22) par le biais d'un élément de blocage (42) du dispositif de butée d'individualisation (36), de manière à ce que l'élément de butée (26) se trouve dans un état de butée verrouillé en s'étendant au-delà du plan de transport, lorsque le drapeau de commande (22) se trouve dans la deuxième position, après qu'un premier support de charge (34) est passé devant le dispositif de butée d'individualisation (36) et maintient le drapeau de commande (22) dans la deuxième position, et se trouve dans un état de libération en étant apte à se déplacer sous le plan de transport lorsque le drapeau de commande (22) se trouve dans la première position, l'élément de blocage (42) étant mobile par rapport au dispositif de butée d'individualisation (36), de façon à former un engagement par complémentarité de forme (52) avec un élément de commande (48), permettant ainsi de recevoir une force de butée exercée par un deuxième support de charge (60) consécutif sur l'élément de butée (26), la position de l'élément de commande (48) étant définie par la position du drapeau de commande (22), l'élément de commande (48) formant un piège (52) pour l'élément de blocage (42) lorsque le drapeau de commande (22) se trouve dans la deuxième position, l'élément de blocage (42) étant déplaçable par rapport au dispositif de butée d'individualisation (36) de manière à tomber dans le piège après le passage du premier support de charge (34, 60), lorsque le drapeau de commande (22) se trouve dans la deuxième position.

2. Étagère traversante selon la revendication 1, dans laquelle le dispositif de butée d'individualisation (36) comporte un trou oblong (40) dans lequel l'élément de blocage (42) peut être déplacé par translation.

3. Étagère traversante selon la revendication 1 ou 2, dans laquelle l'élément de commande (48) comporte une courbe de commande (50) conçue pour commander la position de l'élément de blocage (42) par rapport au dispositif de butée d'individualisation (36).

4. Étagère traversante selon la revendication 3, dans laquelle l'élément de commande (48) comporte une courbe de commande (50) sur laquelle roule l'élément de blocage (42) lorsque le drapeau de commande (22) pivote de la première position vers la deuxième position et lorsque le drapeau de commande (22) est maintenu dans la deuxième position après le passage du premier support de charge (34, 60).

5. Étagère traversante selon l'une des revendications précédentes, avec un élément de rappel élastique pour l'élément de blocage (42), l'élément de rappel permettant d'exercer une force de rappel sur l'élément de blocage (42) dès que l'élément de blocage (42) est déplacé hors de sa position de repos par l'élément de commande (48).

6. Étagère traversante selon l'une des revendications précédentes, dans laquelle l'élément de commande (48) comporte une coulisse de commande (58) dans laquelle s'engage une barre de commande (32) reliée à un axe de pivotement (24) du drapeau de commande (22), afin de régler une position de pivotement de l'élément de commande (48) en fonction de la position du drapeau de commande (22).

7. Étagère traversante selon l'une des revendications précédentes, dans laquelle l'élément de commande (48) est conçu en forme de cliquet et fixé de façon pivotante sur l'étagère traversante (54).

8. Étagère traversante selon l'une des revendications précédentes, dans laquelle l'axe de pivotement (24) du drapeau de commande (22) est perpendiculaire au plan de transport.

9. Étagère traversante selon la revendication 8, dans laquelle le drapeau de commande (22) s'étend sur la moitié de la largeur de l'étagère traversante lorsque le drapeau de commande (22) se trouve dans sa première position.

10. Étagère traversante selon la revendication 8, dans laquelle le drapeau de commande (22) s'étend sur toute la largeur de l'étagère traversante lorsque le drapeau de commande (22) se trouve dans sa première position.

11. Étagère traversante selon la revendication 8, 9 ou 10, dans laquelle le drapeau de commande (22) est élastiquement déformable.

12. Étagère traversante selon la revendication 11, dans laquelle le drapeau de commande (22) est constitué d'une matière plastique élastiquement déformable.

13. Étagère traversante selon l'une des revendications 8 à 12, avec un élément d'amortissement destiné à amortir le retour du drapeau de commande (22) de la deuxième position vers la première position.

14. Étagère traversante selon l'une des revendications précédentes, avec une butée de retrait (20) sur le côté retrait (18) et au moins des premiers et deuxièmes supports de charge (34, 60), dans laquelle l'espacement entre l'élément de butée (26) et la butée de retrait (20) est supérieur ou égal à la longueur du plus long parmi les premier et deuxième supports de charge (34, 60).

15. Étagère traversante selon la revendication 14, dans laquelle l'espacement entre la butée de retrait (20) et l'élément de butée (26) n'est pas supérieur à la somme de la longueur du plus court parmi les premier et deuxième supports de charge (34, 60) et la longueur du drapeau de commande (22), de sorte que le drapeau de commande (22) peut être maintenu dans la deuxième position par chacun des premiers et deuxièmes supports de charge (34, 60) lorsque le support de charge (34, 60) concerné s'applique sur la butée de retrait (20).

16. Étagère traversante selon l'une des revendications précédentes, dans laquelle la longueur du drapeau de commande (22) mesure au moins la moitié de la longueur de l'espacement entre l'élément de butée (26) et la butée de retrait (20), avec un espacement de 50% à 75% entre l'élément de butée (26) et la butée de retrait (20), en particulier d'au moins 600 mm.

17. Étagère traversante selon la revendication 16, avec un espacement de 700 mm à 750 mm entre l'élément de butée (26) et la butée de retrait (20).

18. Procédé pour la séparation de premiers et deuxièmes supports de charge (34, 60) dans une étagère traversante selon l'une des revendications précédentes, dans lequel l'élément de butée (26) est pivoté lors du passage devant le premier support de charge (34), dans l'état de libération du dispositif de butée d'individualisation (36), de sorte qu'en raison du mouvement de pivotement du drapeau de commande (22) ainsi produit, l'élément de blocage (42) est déplacé hors de sa position de repos par l'élément de commande (48), si bien qu'après le passage du premier support de charge (34), l'élément de blocage (42) est renvoyé dans la direction de sa position de repos, **caractérisé en ce que** celui-ci forme à cet endroit un engagement par complémentarité de forme avec l'élément de commande (48), permettant de réaliser l'état de butée verrouillé du dispositif de butée d'individualisation (36), de manière à ce que le deuxième support de charge (60) consécutif rencontre l'élément de butée (26) dans l'état de butée verrouillé, tout en étant ainsi maintenu, de façon à séparer le deuxième support de charge (60) d'avec le premier support de charge (34).

19. Procédé selon la revendication 18, dans lequel le renvoi de l'élément de blocage (42) dans sa position de repos est réalisé uniquement du fait de la pesanteur.

20. Système d'étagères avec une étagère traversante selon l'une des revendications 1 à 17 et avec des premiers et deuxièmes supports de charge (34, 60), dans lequel les deuxièmes supports de charge (34, 60) présentent le double de la longueur des premiers supports de charge (34, 60) dans la direction de transport (19), et dans lequel une région de réception de l'étagère traversante entre l'élément de butée (26) et la butée de retrait (20) est conçue pour recevoir deux des premiers supports de charge (34, 60) agencés l'un à la suite de l'autre dans la direction de transport (19) ou l'un des deuxièmes supports de charge (34, 60), et dans lequel le drapeau de commande (22) présente une longueur d'au moins 50% de la longueur de la région de réception entre la butée de retrait (20) et l'élément de butée (26).

21. Système d'étagères avec une étagère traversante selon la revendication 20, dans lequel le drapeau de commande (22) présente entre 50% et 75% de la longueur de l'un des deuxièmes supports de charge (34, 60).
